# EUROPÄISCHE PATENTSCHRIFT

(11) **EP 2 279 682 B1**
(45) Veröffentlichungstag und Bekanntmachung des Hinweises auf die Patenterteilung: **06.03.2013**
(21) Anmeldenummer: 10009547.0
(22) Anmeldetag: 26.06.2007
(51) Int. Cl.: A47J 27/62, A47J 39/00

(54) **Gargut-Zubereitung mit Dampfaustritt-Detektion**
Preparation of food products by cooking with vapour escape detection
Préparation de produits de cuisson à détection de sortie de vapeur

(43) Veröffentlichungstag der Anmeldung: 02.02.2011
(62) Teilanmeldung aus: 10001571.8
(73) Patentinhaber: V-Zug AG, CH-6301 Zug (CH)
(72) Erfinder: Estermann, Barbara, 6300 Zug (CH); Dohner, Nina, 8800 Thalwil (CH)
(74) Vertreter: Sutter, Kurt

(56) Entgegenhaltungen:
- EP-A- 1 619 443
- EP-A1- 0 541 166

## Beschreibung

Die Erfindung bezieht sich auf ein Verfahren zum Zubereiten von Gargut im Garraum eines Gargeräts gemäss Oberbegriff von Anspruch 1 sowie auf ein Gargerät mit einer Steuerung ausgestaltet zur automatischen Durchführung des Verfahrens.

Aus EP 1 619 443 ist ein Gargerät bekannt, das einen Dampfaustritt-Sensor besitzt, mit welchem der Austritt von Dampf aus dem Gargut detektiert werden kann. Der Dampfaustritt-Sensor umfasst eine Öffnung am Garraum und einen ausserhalb der Öffnung angeordneten Temperatursensor. Tritt Dampf aus dem Gargut aus, so kommt es zu einem Austritt von heissem Gas durch die Öffnung, was vom Temperatursensor gemessen werden kann. In EP 1 619 443 wird der Temperatursensor dazu eingesetzt, bei Dampfaustritt eine Klappe zu öffnen, was es erlaubt, dem Garraum Feuchte zu entziehen.

Aus EP 1 166 694 ist ein Dampfgargerät mit einem ähnlichen Sensor bekannt. Dort wird der Sensor dazu verwendet festzustellen, ob der Dampfgenerator eine angemessene Menge von Dampf generiert.

Darüber hinaus sind verschiedene Geräte bekannt, bei denen der Ablauf der Zubereitung von Gargut aufgrund von Sensorsignalen automatisch gesteuert wird. Beispielsweise wird die Kerntemperatur des Garguts gemessen, um daraus den Verlauf der Garraumtemperatur oder das Ende der Garung festzulegen.

EP 541 166 beschriebt einen Dampfkochtopf. An diesem ist ein Messrohr angeordnet, in dem zur Erfassung des Dampfpunktes einer im Topf vorhandenen Flüssigkeit mindestens ein Dampfsensor vorgesehen ist. Sobald ein Dampfaustritt durch das Messrohr detektiert wird, erfolgt eine Reduktion der Heizleistung und es beginnt die nächste Garphase.

Es stellt sich die Aufgabe, ein Verfahren sowie ein Gargerät der eingangs genannten Art bereitzustellen, welche eine verbesserte automatische Steuerung des Ablaufs der Zubereitung erreichen.

Diese Aufgabe wird vom Gegenstand der unabhängigen Ansprüche gelöst.

Demgemäss wird das Signal des Dampfaustritt-Sensors zur Steuerung des Ablaufs eingesetzt. Es zeigt sich, dass der Zeitpunkt des Austretens von Dampf aus dem Gargut einen nützlichen Parameter zur Steuerung des Gargeräts darstellt.

Gemäss Anspruch 1 wird die Detektion des Dampfaustritts vor einem Zeitpunkt ta unterdrückt.

Insbesondere kann bei Detektion des Dampfaustritts die Heizleistung und/oder die Soll-Garraumtemperatur abgesenkt werden, oder es kann auf eine andere Betriebsart umgeschaltet werden. Dabei ist die Soll-Garraumtemperatur die Solltemperatur des Garraums, nach welcher die Heizleistung geregelt wird. Durch die Reduktion der Heizleistung beziehungsweise der Soll-Garraumtemperatur bei Beginn des Dampfaustritts kann verhindert werden, dass sich die Oberfläche des Garguts zu schnell erwärmt und austrocknet oder verkohlt.

Weiter kann die Zeitdauer t1 vom Beginn der Aufwärmphase bis zum Dampfaustritt dazu verwendet werden, die Zeitdauer t2 oder Temperatur mindestens einer folgenden Zubereitungsphase festzulegen. Dieses Vorgehen ist vorteilhaft, weil die Zeitdauer t1 ein von der Geometrie und der thermischen Masse des Garguts abhängiger Parameter ist, von welchem z.B. ideale Dauer oder Temperatur einzelner Zubereitungsphase abhängig ist.

Die Schritte des erfindungsgemässen Verfahrens können in der Steuerung eines Gargeräts einprogrammiert sein, so dass sie vom 2a gerät autonom und selbstständig durchgeführt werden können.

Weitere bevorzugte Ausführungen der Erfindung ergeben sich aus den abhängigen Ansprüchen sowie aus der nun folgenden Beschreibung anhand der Figuren. Dabei zeigen:
Fig. 1 einen schematischen Schnitt durch ein Gargerät,
Fig. 2 den Temperaturverlauf am Dampfaustritt-Sensor (obere Kurve) und im Garraum sowie im Gargut (untere Kurven) bei Verwendung eines Dampfgenerators in der Aufwärmphase und
Fig. 3 den Temperaturverlauf am Dampfaustritt-Sensor (obere Kurve) und im Garraum sowie im Gargut (untere Kurven) ohne Verwendung eines Dampfgenerators in der Aufwärmphase.

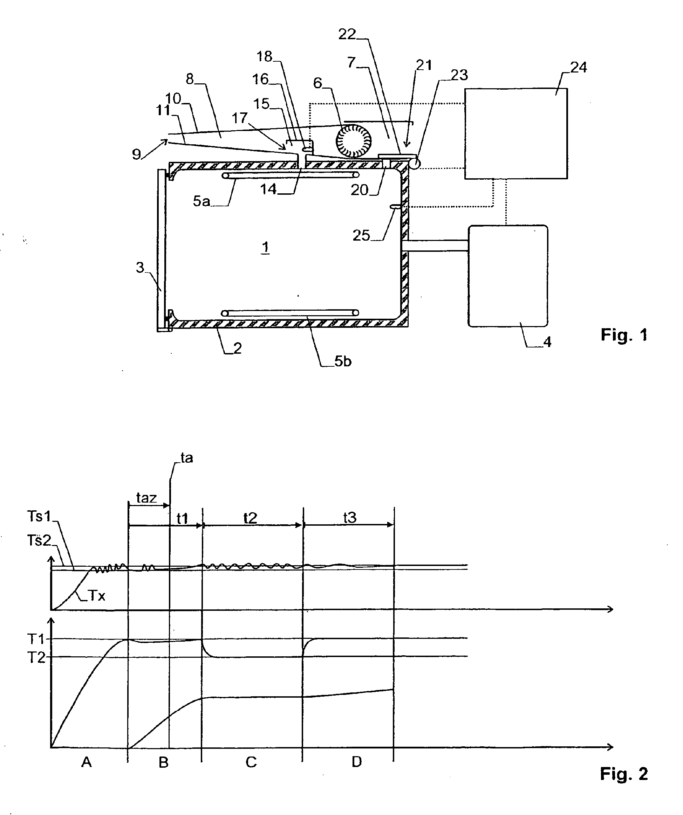

Das Gargerät gemäss Fig. 1, bei welchem es sich insbesondere um einen Backofen handelt, besitzt einen Garraum 1, der von Wänden 2 und einer Türe 3 begrenzt wird. Das als Beispiel gezeigte Gerät kann sowohl als Backofen, als auch als Dampfgargerät betrieben werden. Es besitzt eine konventionelle resistive Heizung mit Oberhitze 5a und Unterhitze 5b (welche sich, wie dargestellt, innerhalb des Garraums 1, aber auch ausserhalb des Garraums 1 befinden können). Die Heizung 5a, 5b dient dazu, die sich im Garraum befindlichen Gase aufzuheizen. Weiter besitzt das Gerät einen Dampfgenerator 4, wie er z.B. in EP 1 166 694 beschreiben ist. Alternativ oder zusätzlich zur Heizung 5a, 5b kann das Gerät auch mit Heissluft oder mit einem Grill-Heizkörper ausgestattet sein.

Ausserhalb des Garraums 1 ist ein Querstromlüfter 6 als Gebläse angeordnet. Je nach benötigter Bauform können auch andere Lüftertypen, wie z.B. Radiallüfter, eingesetzt werden. Der Lüfter fördert Luft von einem Ansaugbereich 7 in einen Druckraum 8. Vom Druckraum 8 tritt die geförderte Luft durch eine frontseitige Austrittsöffnung 9 des Geräts in die Umgebung aus. Der Druckraum 8 wird nach oben durch eine geneigte Deckplatte 10 und nach unten durch eine geneigte Bodenplatte 11 begrenzt, derart, dass sich der Druckraum 8 gegen die Austrittsöffnung 9 hin verjüngt. Seitlich ist der Druckraum durch Seitenwände (nicht gezeigt) geschlossen. Die sich gegen die Austrittsöffnung 9 hin verjüngende Ausgestaltung des Druckraums 8 ist nicht unbedingt notwendig. Denkbar ist auch eine im Wesentlichen parallele Führung der Deckplatte 10 und der Bodenplatte 11.

In der Decke des Garraums 1 sind zwei Öffnungen 14, 20 angeordnet. Öffnung 20 besitzt einen Durchmesser von rund 2.5 cm, Öffnung 14 ist vorzugsweise kleiner.

Das Gerät besitzt einen Dampfaustritt-Sensor. Dieser umfasst die erste Öffnung 14, welche als Messöffnung dient und vom Garraum 1 in den Innenraum 15 eines Schutzgehäuses 16 führt. Das Schutzgehäuse 16 ist im Druckraum 8 angeordnet und kommuniziert mit diesem über eine Verbindungsöffnung 17. Die Verbindungsöffnung 17 befindet sich auf der dem Gebläse abgewandten Seite des Schutzgehäuses 16. Im Schutzgehäuse 16 ist ferner bei der Mündung der ersten Öffnung 14 ein Temperatursensor 18 angeordnet, der eine Temperatur Tx misst. Die erste Öffnung 14 ist immer geöffnet.

Eine zweite, verschliessbare Öffnung 20 verbindet den Garraum 1 mit dem Ansaugbereich 7 vor dem Gebläse 6. Zum Verschliessen der zweiten Öffnung 20 ist ein Verschluss 21 vorgesehen, der aus einer Klappe 22 besteht, die von einem Schritt- oder Servomotor 23 mehr oder weniger weit über die Mündung der Öffnung 20 geschoben werden kann, derart dass der Verschluss im wesentlichen kontinuierlich von einer geschlossenen in eine geöffnete Stellung übergeführt werden kann. Denkbar ist auch eine Ausführung, bei welcher die Klappe 22 nur eine geschlossene und eine offene Stellung einnehmen kann. Zwischenstellungen für einen reduzierten Durchfluss durch Öffnung 20 können in diesem Fall, soweit notwendig, durch wiederholtes, kurzzeitiges Öffnen und Schliessen der Klappe 22 erreicht werden, im Sinne einer Pulsbreitenmodulation.

Zum Steuern des Dampfgenerators 4, des Verschlusses 21 und der weiteren Komponenten des Gargeräts ist eine Steuerung 24 vorgesehen, die unter anderem das vom Temperatursensor 18 abgegebene Temperatursignal überwacht.

Der Dampfgenerator 4 wird grundsätzlich in der in EP 1 166 694 beschriebenen Weise gesteuert, wobei auf die dortige Beschreibung, insbesondere in den Absätzen 0021 bis 0024, Bezug genommen wird. Fällt die Temperatur Tx am Temperatursensor 18 unter einen unteren Schwellenwert Ts1, so wird dem Dampfgenerator 4 Energie zugeführt. Andererseits kann die Öffnung 20 optional geöffnet werden, wenn die Temperatur Tx am Temperatursensor 18 über einen oberen Schwellwert Ts2 ansteigt, so dass dem Garraum 1 Dampf entzogen wird.

Im Garraum 1 ist ferner ein Garraumtemperatur-Sensor 25 vorgesehen, mit welchem die Temperatur des Garraums gemessen werden kann. Weiter kann auch ein Kerntemperatur-Sensor vorhanden sein (nicht gezeigt), beispielsweise in Form einer Nadel, die in das Gargut gestochen werden kann. In den im Folgenden beschriebenen Verfahren kommt dieser Kerntemperatur-Sensor jedoch nicht notwendigerweise zum Einsatz, da im erfindungsgemässen Verfahren der Zustand des Garguts auch über den Dampfaustritt erfasst werden kann.

Im Betrieb des Gargeräts ist das Gebläse 6 dauernd im Betrieb. Dabei saugt es Luft durch Öffnungen in der Rückwand und in den Seitenwänden des Gargeräts aus der Umgebung an. Diese Luft durchtritt den Ansaugbereich 7, wird in den Druckraum 8 geblasen und verlässt diesen durch die Austrittsöffnung 9. Da der Druckraum 8 gegen die Austrittsöffnung 9 hin verjüngt ist, entsteht dabei im Druckraum 8 ein leichter Überdruck, d.h. ein Druck, der höher als der Umgebungsdruck ist, während der Druck im Ansaugbereich 7 geringer ist. Damit muss im Garraum 1 ein gewisser Überdruck herrschen, damit der Temperatursensor 18 anspricht. Andererseits kann durch Öffnen der Öffnung 20 dem Garraum 1 schnell und effizient Dampf entzogen werden.

Des Weiteren besteht die Aufgabe des Gebläses 6 darin, zur Kühlung des Geräts die Luft, die sich an der Aussenseite des Garraums erwärmt hat, nach aussen abzuführen.

Das hier gezeigte Gerät kann in verschiedenen Betriebsmodi betrieben werden, wozu die Steuerung 24 mit geeigneten Eingabeelementen versehen ist, über welche der Benutzer ein gewünschtes Programm auswählen kann. Insbesondere kann das Gerät in konventioneller Weise als Gargerät eingesetzt werden, zum Beispiel unter Eingabe einer gewünschten Garraumtemperatur.

Zusätzlich ist mindestens ein Betriebsmodus vorgesehen, welcher einen Betrieb des Gerätes gemäss einem erfindungsgemässen Verfahren erlaubt. Im Folgenden werden mehrere solcher Verfahren beschrieben.

Fig. 2 illustriert ein derartiges Verfahren, beispielsweise zur Zubereitung eines Kuchens oder Auflaufs. Das dargestellte Verfahren umfasst eine Aufwärmphase A, B, eine Garphase C sowie eine Bräunungsphase D.

Im vorliegenden Beispiel umfasst die Aufwärmphase zwei Abschnitte A und B. Im ersten Abschnitt A wird der Garraum 1 auf eine erste Solltemperatur T1 von z.B. 220°C vorgeheizt. Dabei ist zumindest die elektrische Heizung 5a, 5b sowie (je nach Gargut und Ausrüstung des Gargeräts) auch der Dampfgenerator 4 in Betrieb, und deren Leistung wird so geregelt, dass die Garraumtemperatur sich auf die erste Solltemperatur T1 einstellt.

Wie aus der oberen Kurve von Fig. 2 ersichtlich, wird dabei die Temperatur Tx bis über den oberen Schwellwert Ts2 ansteigen, worauf die Öffnung 20 geöffnet wird und die Temperatur Tx wieder absinkt. Sinkt die Temperatur Tx unter den unteren Schwellwert Ts1 ab, so wird dem Dampfgenerator 4 wieder Energie zugeführt, worauf die Temperatur Tx wiederum ansteigt, usw. Der Betrieb des Dampfgenerators 4 in dieser Phase erlaubt es, den Garraum 1 schneller aufzuheizen.

Wenn die erste Solltemperatur T1 erreicht ist, wird im zweiten Abschnitt B das Gargut in den Garraum 1 eingeführt. Dadurch sinkt die Temperatur im Garraum 1 kurzzeitig etwas ab, was dazu führt, dass die Heizung 5a, 5b sowie der Dampfgenerator 4 wieder stärker in Betrieb genommen werden. In der oberen Kurve von Fig. 2 ist deshalb ersichtlich, wie die Temperatur Tx aufgrund der Dampfzufuhr wieder über den oberen Schwellwert Ts2 ansteigt, worauf die Öffnung 20 freigegeben wird und die Temperatur Tx wieder absinkt. Dieser Vorgang wiederholt sich, bis die Temperatur Tx nicht mehr unter den unteren Schwellwert Ts1 fällt. Danach findet keine weitere Dampfzufuhr mehr statt.

Wie aus der untersten Kurve von Fig. 2 ersichtlich, steigt dabei die Temperatur im Gargut kontinuierlich an. Erreicht sie einen Wert von 90° und mehr, so beginnt eine grosse Menge Dampf aus dem Gargut auszutreten. Dieser führt zu einem Austritt von heissem Gas durch die Öffnung 14, so dass die Temperatur Tx wieder über den oberen Schwellwert Ts2 ansteigt. Das entsprechende Signal vom Temperatursensor 18 erlaubt es der Steuerung 24 festzustellen, dass Dampf aus dem Gargut austritt. Darauf hin wird die Garphase C eingeleitet.

Bevor die Garphase C im Detail beschrieben wird, werden im Folgenden noch einige wichtige Aspekte der Aufwärmphase A, B diskutiert.

In der Ausführung nach Fig. 2 ist die Aufwärmphase in zwei Abschnitte A und B unterteilt, wobei der Garraum im Abschnitt A ohne Gargut vorgeheizt wird. Je nach Gargut kann das Vorheizen auch entfallen. In diesem Fall befindet sich das Gargut von Anfang an im Garraum.

Der Austritt von Dampf aus dem Gargut wird, wie erwähnt, durch das Ansteigen der Temperatur Tx am Temperatursensor 18 über den oberen Schwellwert Ts2 festgestellt. Dabei muss aber unterschieden werden, ob der Anstieg auf eine Zufuhr von Dampf aus dem Dampfgenerator 4 oder auf einen Austritt von Dampf aus dem Gargut zurückzuführen ist. Hierzu gibt es verschiedene Möglichkeiten, welche alternativ oder kumulativ eingesetzt werden können:
1) Steigt die Temperatur Tx über den oberen Schwellwert Ts2 an, währenddem oder kurz nachdem dem Dampfgenerator Energie zugeführt wird bzw. wurde, so ist davon auszugehen, dass dieses Ereignis nicht einen Dampfaustritt aus dem Gargut zuzuordnen ist, sondern der Zufuhr von Dampf vom Dampfgenerator 4.
2) Ein Dampfaustritt aus dem Gargut kann erst dann stattfinden, wenn das Gargut ausreichend erwärmt worden ist. Deshalb kann die Detektion des Dampfaustritts bis zu einem gewissen Zeitpunkt ta unterdrückt werden. Beispielsweise kann der Zeitpunkt ta eine vorgegebene Zeitspanne taz nach dem Beginn des Aufwärmens des Garguts liegen. Steigt die Temperatur Tx vor dem Zeitpunkt ta über den oberen Schwellwert Ts2 an, so ist davon auszugehen, dass dieses Ereignis nicht einem Dampfaustritt aus dem Gargut zuzuordnen ist.

In der Aufwärmphase A, B wird die Zeitdauer t1 vom Beginn des Aufwärmens des Garguts bis zum Dampfaustritt gemessen. Diese Zeitdauer hängt grundsätzlich von der thermischen Masse des Garguts, vor allem aber von dessen Geometrie ab. Ein dünnes Gargut zeigt früher einen starken Dampfaustritt als ein dickes Gargut.

Weiter wird vorzugsweise ein Parameter p gemessen, der von der Energie abhängt, die dem Garraum während der Aufwärmphase bis zum Dampfaustritt aus dem Gargut zugeführt worden ist. Dieser Parameter p ist ein Mass für die thermischen Masse des Garguts. Der Parameter p kann beispielsweise wie folgt ermittelt werden:
a) Es wird die gesamte Energiemenge bestimmt, welche in den Abschnitten A und B dem Garraum 1 über die Heizungen 5a, 5b, den Dampfgenerator 4 und/oder allenfalls einer Mikrowellenquelle zugeführt worden ist.
b) Es wird die Energiemenge bestimmt, welche im Abschnitt B, d.h. erst nach Einführen des Garguts, dem Garraum 1 über die Heizungen 5a, 5b, den Dampfgenerator 4 und/oder allenfalls einer Mikrowellenquelle zugeführt worden ist.

Somit können die folgenden Zubereitungsphasen durch die Zeitdauer t1 und/oder den Parameter p beeinflusst werden. Beispiele hierfür werden im Folgenden beschrieben.

Wie erwähnt, endet die Aufwärmphase bei Detektion des Dampfaustritts aus dem Gargut. Im Beispiel nach Fig. 2 folgt sodann die Garphase C.

Ziel der Garphase C ist es, je nach Art des Garguts, das Gargut zu garen und/oder zu trocknen. Hierzu ist die Temperatur im Gargut auf einem Wert von 85 - 99°C zu halten. Ist die Garraumtemperatur in dieser Phase zu hoch, so erreicht die Oberfläche des Garguts eine Temperatur von wesentlich mehr als 100°C, was zu einer unerwünschten Austrocknung oder Schwärzung führt. Deshalb ist es vorteilhaft, wenn in der Garphase C die Heizleistung, welche dem Garraum 1 zugeführt wird, oder die Soll-Garraumtemperatur, nach welcher die Heizleistung geregelt wird, reduziert wird.

In der Ausführung nach Fig. 2 wird deshalb die Soll-Garraumtemperatur auf einen Wert T2 von beispielsweise 180°C abgesenkt.

Die Zeitdauer t2 der Garphase C kann in unterschiedlicher Weise festgelegt werden:
a) Es kann sich um eine feste, vorgegebene Zeitdauer handeln, welche durch das vom Benutzer ausgewählte Programm festgelegt wird.
b) Die Zeitdauer t2 kann eine Funktion der Zeitdauer t1 und/oder des Parameters p sein. Beispielsweise kann gelten t2 = k·t1, wobei der Faktor k ein experimentell bestimmter Wert ist. Typische Werte des Faktors k liegen im Bereich von 0.5 bis 5.
c) Die Garphase C kann beendet werden, wenn der Dampfaustritt aus dem Gargut unter einen Minimalwert absinkt. Dies gilt insbesondere für Gargut, welchem in der Garphase ein wesentlicher Teil des Wassers entzogen werden soll, wie zum Beispiel trockenes Gebäck. Hierzu kann beispielsweise gemessen werden, wie häufig die Temperatur Tx am Temperatursensor 18 über den oberen Schwellwert Ts2 ansteigt. Fällt die Häufigkeit dieser Ereignisse unter eine vorgegebene Rate, so wird die Garphase C beendet.

An die Garphase C kann eine Bräunungsphase D anschliessen. In dieser Phase wird die Temperatur im Garraum gegenüber der Garphase wieder erhöht, beispielsweise auf den ursprünglichen Wert T1 von 220°C. Dadurch wird eine Bräunung und/oder Trocknung erreicht, wie sie für gewisse Speisen erwünscht ist. Der Begriff "Bräunungsphase" impliziert nicht notwendigerweise, dass in dieser Phase das Gargut gebräunt wird, auch wenn dies für viele Speisen der Fall sein wird.

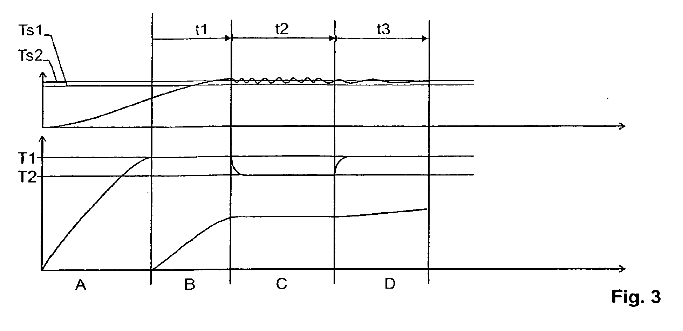

In Fig. 3 wird die Zubereitung von Gargut ohne Verwendung eines Dampfgenerators gezeigt. Tendenziell dauert in diesem Fall die Aufwärmphase A, B etwas länger, da die Energie weniger schnell ins Gargut eingebracht werden kann. Ein Ansteigen der Temperatur Tx über den oberen Schwellwert Ts2 zeigt an, dass aus dem Gargut Dampf auszutreten beginnt.

Dem Gargut kann Wärme auch mittels Mikrowellen oder Infrarotstrahlung zugeführt werden.

Im Folgenden werden die einzelnen Zubereitungsphasen einiger ausgewählter Speisen in Form von Beispielen genauer beschrieben.

### Apfelwähe

Unter Apfelwähe ist ein Apfelkuchen zu verstehen, welcher einen dünnen Teigboden von z.B. 2 mm Dicke besitzt, auf welchem Apfelstücke und ein Guss, beispielsweise aus einer Mischung aus Ei, Rahm und Zucker, aufgebracht sind. Die Höhe einer Apfelwähe beträgt in der Regel 2 bis 3 cm.

Bei der Zubereitung von Apfelwähe kann der Dampfgenerator bis Ende Phase B eingeschaltet sein.

Die Zubereitungsphasen bei Apfelwähe sind beispielsweise wie folgt:

Aufwärmphase: Der Garraum 1 wird ohne Gargut auf eine Soll-Garraumtemperatur von 200°C vorgeheizt. Nach Erreichen der Soll-Garraumtemperatur wird das Gargut in den Garraum 1 eingebracht. Die Aufwärmphase endet, wenn vom Dampfaustritt-Sensor ein Dampfaustritt aus dem Gargut detektiert wird.

Garphase: In der Garphase wird die Soll-Garraumtemperatur auf 180°C abgesenkt. Vorzugsweise wird primär mit Unterhitze geheizt. In dieser Phase wird der Guss abgebunden, der Boden gebacken, die Äpfel werden gegart und der Apfelwähe wird Wasser entzogen. Die Dauer t2 der Garphase kann ein fester vorgegebener Wert von beispielsweise 20 Minuten sein. Sie kann auch vom Parameter p oder von der Zeitdauer t1 der Aufwärmphase abhängen, beispielsweise kann t2 ≅ t1 gewählt werden.

Bräunungsphase: In der Bräunungsphase wird die Soll-Garraumtemperatur wieder auf circa 200°C angehoben. In dieser Phase wird die Oberfläche des Garguts gleichmässig gebräunt. Die Dauer t3 der Bräunungsphase kann ein fester vorgegebener Wert von beispielsweise 5 Minuten sein. Sie kann auch vom Parameter p oder von der Zeitdauer t1 der Aufwärmphase abhängen, z.B. t3 ≅ 0.25·t3.

### Kuchen, gerührter Teig

Zur Zubereitung eines Kuchens aus gerührtem Teig in einer Teigform von 8 × 30 cm und einer Höhe von 7 cm (vor dem Backen) wird gleich vorgegangen wie beim Beispiel Apfelwähe. Um die Aufwärmphase zu beschleunigen, kann zumindest im Abschnitt B jedoch auch der Dampfgenerator 4 eingesetzt werden.

Die Zeitdauer t2 der Garphase beträgt circa 50 Minuten, wobei t2 = t1·k (mit k ≅ 4 - 5).

Bei grossen Cakes gibt es keine Bräunungsphase, bei Kleingebäcken wie Muffins oder kleine Küchlein schon. Dabei gilt: t2 = t1·(k-1) (mit k≅ 4 - 5) und t3 ≅ t1.

### Feinbäck

Die Zubereitung von trockenem Gebäck, wie z.B. Mailänderli mit einer Teigdicke von 5 mm erfolgt wie beim Beispiel Apfelwähe.

Aufwärmphase: Der Garraum 1 wird auf 180°C vorgeheizt und das Gargut wird eingebracht. Die Aufwärmphase wird beendet, wenn ein Dampfaustritt aus dem Gargut detektiert wird.

Garphase: Die Soll-Garraumtemperatur wird vorzugsweise auf circa 160°C abgesenkt. In dieser Phase quellt die Stärke im Gargut, es findet eine Denaturierung der Proteine statt und die Maillard-Reaktion beginnt. Die Dauer t2 der Garphase beträgt 7 Minuten. Wobei gilt: t1 ≅ t2.

Bräunungsphase: Je nach Art des Gebäcks kann der Garphase eine Bräunungsphase folgen. Die Soll-Garraumtemperatur wird auf 190°C angehoben. In dieser Phase trocknet die Oberfläche ab, die Maillard-Reaktion läuft weiter und es kann zu einer Karamellisierung kommen. t3 ≅ 1/3·t1.

### Gebackene Kartoffeln (Baked Potatoes)

Zur Zubereitung gebackener Kartoffeln kann in der Aufwärmphase und in der Garphase Dampf zugeführt werden. Die Öffnung 20 kann während dieser Zeit geschlossen bleiben.

Der Ablauf ist wie folgt:

Aufwärmphase: Ein Vorheizen entfällt. Das Gargut wird von Anfang an in den Garraum eingebracht, damit der Dampf vom Dampfgenerator an seiner Oberfläche kondensiert, wodurch eine schnellere Erwärmung erreicht wird. Durch die Befeuchtung der Kartoffelschale löst sich diese später besser von der Kartoffel. Die Soll-Garraumtemperatur wird auf 220°C eingestellt. Es wird die Zeitdauer t1 gemessen, bis ein Dampfaustritt aus dem Gargut detektiert werden kann. Diese gibt einen Hinweis auf die Grösse und Menge der Kartoffeln.

Garphase: In der Garphase bleibt die Garraumtemperatur weiterhin auf 220°C. Die Zeitdauer t2 der Garphase ergibt sich aus t2 = *k*·t1 (mit k ≈ 2). t2 kann jedoch auch ein fest vorgegebener Wert von z.B. 20 Minuten sein.

Bräunungsphase: Spätestens in der Bräunungsphase wird der Dampfgenerator 4 abgeschaltet, da nun die Oberfläche der Kartoffeln getrocknet werden soll. Die Garraumtemperatur wird weiter auf 220°C gehalten. Die Dauer t3 der Bräunungsphase beträgt circa 10 Minuten. t3 ≅ t1.

### Gratin

Die Zubereitung von Gratin (Auflauf) kann ungefähr gleich wie jene der Apfelwähe durchgeführt werden. Das Gargut kann jedoch von Anfang an im Garraum 1 sein, d.h. eine separate Vorheizphase entfällt. Zudem kann in der Aufwärmphase und der Garphase optional Dampf vom Dampfgenerator 4 zugeführt werden.

Die Soll-Garraumtemperatur beträgt in der Aufwärmphase 200°C, in der Garphase 170°C und in der Bräunungsphase 220°C. Durch das Absenken der Temperatur in der Garphase wird einerseits eine vorzeitige Bräunung verhindert und andererseits einem Überkochen des Garguts entgegengewirkt.

Die Aufwärmphase wird beendet, wenn ein Dampfaustritt aus dem Gargut detektiert wird. Die Dauer t2 der Garphase beträgt beispielsweise fest 20 Minuten, oder t2 = k·t1 (mit k = 2)und jene der Bräunungsphase 10 Minuten oder t3 = t1. In einer anderen Ausführung wird die Garphase beendet, wenn die Rate des Dampfaustritts aus dem Gargut unter eine vorgegebene Schwelle absinkt.

### Brötchen

Die Zubereitung von Hefeteig-Brötchen aus 1 kg Teig läuft wie folgt ab:

Aufwärmphase: Der Garraum wird auf eine Temperatur von 230 bis 250°C vorgeheizt. Bei Erreichen dieser Temperatur wird das Gargut in den Garraum 1 eingebracht. Dann wird die Soll-Garraumtemperatur auf 180° abgesenkt. Ausserdem kann kurzzeitig Dampf in den Garraum eingeführt werden, um die Luftfeuchtigkeit zu erhöhen. Die Aufwärmphase endet, wenn ein Dampfaustritt aus dem Gargut detektiert wird. Die Zeit t1 vom Einbringen des Brotes bis zum Dampfaustritt wird gemessen.

Garphase, Bräunungsphase: An die Aufwärmphase schliesst eine kombinierte Garphase und Bräunungsphase an, bei welcher die Soll-Garraumtemperatur weiterhin auf 180°C verbleibt. Die Dauer t2 dieser Phase ergibt sich aus t2 = *k*·t1 (mit k ≅ 3). t2 kann jedoch auch ein fest vorgegebener Wert von z.B. 30 Minuten sein.

### Tiefkühlprodukte (mit und ohne Bräunung)

Bei der Zubereitung von Tiefkühlprodukten, wie zum Beispiel vorgekochtem Gemüse, kann der Zeitpunkt des Dampfaustritts dazu verwendet werden, abzuschätzen, wie lange der Vorgang dauern soll. Während der Aufwärmphase und gegebenenfalls der Garphase kann Wärme mittels der Heizungen 5a, 5b, des Dampfgenerators 4 und/oder mittels Mikrowellen eingebracht werden, soweit das Gargerät mit entsprechenden Elementen ausgerüstet ist.

Aufwärmphase: Das Gargut wird in tiefgekühltem Zustand in den kalten Garraum eingebracht. Die Solltemperatur des Garraums wird auf 170°C ohne Bräunung oder 190°C mit Bräunung gesetzt. Das Gargut taut auf und erwärmt sich, bis es zu einem Dampfaustritt kommt. Wenn der Dampfaustritt-Sensor den Dampfaustritt detektiert, ist die Aufwärmphase beendet. Die Zeit t1 vom Beginn des Vorgangs bis zum Zeitpunkt des Dampfaustritts wird gemessen.

Garphase: Die Garphase ist optional. Sie wird durchgeführt, wenn das Gargut nicht nur eine Erwärmung, sondern auch eine Garung erfordert. In der Garphase kann die Temperatur im Garraum um 10 bis 20°C reduziert werden. Sie kann jedoch auch gleich wie in der Aufwärmphase bleiben. Die Dauer t2 dieser Phase ergibt sich aus t2 = *k*·t1 (k ≅ 0.5). t2 kann jedoch auch ein fest vorgegebener Wert sein.

Bräunungsphase: Auch die Bräunungsphase ist optional. Sie wird beispielsweise bei Produkten verwendet, auf deren Oberfläche eine Maillard-Reaktion, eine Trocknung oder Karamelisierung angestrebt wird. In der Bräunungsphase wird die Temperatur vorzugsweise wieder etwas erhöht, beispielsweise auf 200°C. Die Dauer t3 der Garphase kann wiederum von der Zeitdauer t1 abhängen oder fest vorgegeben sein. t3 ≅ 1/3·t1.

### Bemerkungen:

In den soweit beschriebenen Ausführungsbeispielen wird der Dampfaustritt-Sensor vom Temperatursensor 18 an der Öffnung 14 gebildet. Es sind jedoch auch andere Verfahren zur Detektion eines Dampfaustritts denkbar.

Beispielsweise kann die Flussgeschwindigkeit durch die Öffnung 14 detektiert werden, da der Dampfaustritt aus dem Gargut mit einem Entweichen von Gas aus den Garraum 1 verbunden ist.

Zusätzlich oder alternativ hierzu kann auch ein Feuchtesensor vorgesehen sein, welcher die absolute Feuchte der Atmosphäre im Garraum oder eine Änderung dieser Feuchte misst. Denkbar ist auch die Messung der Gewichtsänderung des Garguts oder des ganzen Geräts.

Die vorliegende Erfindung eignet sich zur Zubereitung einer Vielzahl unterschiedlicher Speisen. Die Detektion des Zeitpunkts des Dampfaustritts aus dem Gargut erlaubt es dabei, indirekt genauere Angaben über Zustand, Form, Grösse und thermische Eigenschaften des Garguts zu erhalten, was eine bessere Steuerung des Verfahrens erlaubt. Ein Kerntemperatur-Sensor wird dabei nicht zwingend benötigt.

Das erfindungsgemässe Verfahren kann, wie erwähnt, in Form von Programmschritten in der Steuerung 24 des Gerätes abgespeichert sein, so dass es vollautomatisch durchgeführt werden kann, falls der Benutzer ein entsprechendes Programm auswählt.

Der Benutzer kann über die Eingabe eines Bräunungsgrads oder eines Gargrades den k-Wert verändern.

## Patentansprüche

1. Verfahren zum Zubereiten von Gargut im Garraum (1) eines Gargeräts, wobei in einer Aufwärmphase das Gargut mindestens stellenweise auf eine Temperatur oberhalb von ca. 90°C aufgewärmt wird, derart, dass ein Dampfaustritt aus dem Gargut stattfindet, und wobei der Dampfaustritt mittels eines Signals von einem Dampfaustritt-Sensor (14, 18) detektiert wird,
wobei bei Detektion des Dampfaustritts aus dem Gargut die Heizleistung und/oder eine Soll-Garraumtemperatur, nach welcher die Heizleistung geregelt wird, reduziert wird, und/oder
wobei die Zeitdauer t1 vom Beginn des Aufwärmens des Garguts bis zum Dampfaustritt gemessen und abhängig von der Zeitdauer t1 eine Zeitdauer t2, t3 oder ein Startzeitpunkt mindestens einer folgenden Zubereitungsphase festgelegt wird
**dadurch gekennzeichnet, dass** die Detektion des Dampfaustritts vor einem Zeitpunkt ta unterdrückt wird.

2. Verfahren nach Anspruch 1, wobei der Dampfaustritt-Sensor (14, 18) eine Öffnung (14) am Garraum (1) und einen ausserhalb der Öffnung angeordneten Temperatursensor (18) umfasst, wobei der Dampfaustritt-Sensor (14, 18) ein Signal abgibt, wenn eine Temperatur (Tx) am Temperatursensor (18) einen oberen Schwellwert (Ts2) überschreitet.

3. Verfahren nach Anspruch 2, wobei mindestens während eines Teils der Aufwärmphase mit einem Dampfgenerator (4) dem Garraum (1) Dampf zugeführt wird, und wobei dem Dampfgenerator (4) Energie zugeführt wird, wenn die Temperatur (Tx) am Temperatursensor (18) unter einem unteren Schwellwert (Ts1) liegt.

4. Verfahren nach Anspruch 3, wobei die Detektion des Dampfaustritts unterdrückt wird, wenn dem Dampfgenerator (4) Energie zugeführt wird.

5. Verfahren nach einem der vorangehenden Ansprüche, wobei der Zeitpunkt ta frühestens nach einer Zeitspanne taz ab Beginn des Aufwärmens des Garguts liegt.

6. Verfahren nach einem der vorangehenden Ansprüche, wobei bei Detektion des Dampfaustritts die Soll-Garraumtemperatur, nach welcher die Heizleistung geregelt wird, während einer der Garphase (C) reduziert wird.

7. Verfahren nach Anspruch 6, wobei die Garphase sich über die Zeitdauer t2 erstreckt.

8. Verfahren nach Anspruch 6, wobei die Garphase beendet wird, wenn der Dampfaustritt aus dem Gargut unter einen Minimalwert absinkt.

9. Verfahren nach einem der Ansprüche 6 bis 8, wobei an die Garphase eine Bräunungsphase anschliesst, in welcher die Temperatur im Garraum (1) gegenüber der Garphase wieder erhöht wird.

10. Verfahren nach einem der vorangehenden Ansprüche, wobei in der Aufwärmphase ein Parameter (p) gemessen wird, welcher von der Energie abhängt, die dem Garraum (1) bis zum Dampfaustritt zugeführt wurde, wobei der Parameter (p) verwendet wird, um eine Zeitdauer und/oder eine Temperatur mindestens einer folgenden Zubereitungsphase festzulegen

11. Verfahren nach einem der vorangehenden Ansprüche, wobei das Gargut in der Aufwärmphase mit Dampf und/oder Mikrowelle erwärmt wird.

12. Gargerät mit einer Steuerung ausgestaltet zur automatischen Durchführung des Verfahrens nach einem der vorangehenden Ansprüche.

## Claims

1. Method for preparing food in the cooking space (1) of a cooking device, wherein in a heat-up phase the food is heated, at least partly, to a temperature above about 90°C, in such a way that a steam emission out of the food takes place, and wherein the steam emission is detected by means of a signal of a steam emission sensor (14, 18),
wherein the heating power and/or an intended cooking space temperature according to which the heating power is controlled, is reduced during a detection of the steam emission out of the food, and/or
wherein the time period t1 from the beginning of the heat-up of the food until the steam emission is measured and a time period t2, t3 or a starting time of at least a subsequent cooking phase is defined depending on the time period t1
**characterized in that** the detection of the steam emission is suppressed before a time instant ta.

2. Method according to claim 1, wherein the steam emission sensor (14, 18) comprises an opening (14) in the cooking space (1) and a temperature sensor (18) arranged outside the opening, wherein the steam emission sensor (14, 18) issues a signal when a temperature (Tx) at the temperature sensor (18) exceeds an upper threshold value (Ts2).

3. Method according to claim 2, wherein steam is supplied to the cooking space (1) with a steam generator (4), at least during a part of the heat-up phase, and wherein energy is supplied to the steam generator (4) when the temperature (Tx) at the temperature sensor (18) lies below a low threshold value (Ts1).

4. Method according to claims 3, wherein the detection of the steam emission is suppressed when energy is supplied to the steam generator (4).

5. Method according to one of the preceding claims, wherein the time instant ta occurs at the earliest after a time period taz from the beginning of the heat-up of the food.

6. Method according to one of the preceding claims, wherein, during the detection of the steam emission, the intended cooking space temperature, according to which the heating power is controlled, is reduced during a cooking phase (C).

7. Method according to claim 6, wherein the cooking phase extends during the time period t2.

8. Method according to claim 6, wherein the cooking phase is terminated when the steam emission out of the food falls below a minimum value.

9. Method according to one of the claims 6 to 8, wherein a browning phase follows the cooking phase, in which the temperature in the cooking space (1) is again increased as compared to the cooking phase.

10. Method according to one of the preceding claims, wherein a parameter (p), which depends on the energy which has been supplied to the cooking space (1) until the steam emission, is measured during the heat-up phase, wherein the parameter (p) is used to define a time period and/or a temperature of at least a subsequent cooking phase.

11. Method according to one of the preceding claims, wherein the food is heated up in the heat-up phase by means of steam and/or microwaves.

12. Cooking device with a controller adapted to automatically carry out the method according to one of the preceding claims.

## Revendications

1. Méthode pour la préparation des produits de cuisson dans la chambre de cuisson (1) d'un dispositif de cuisson, le produit de cuisson étant réchauffé au moins partiellement à une température supérieure à environ 90° C dans une phase de réchauffage, de sorte qu'un échappement de vapeur du produit de cuisson a lieu, et que l'échappement de vapeur est détecté à l'aide d'un signal d'un capteur d'échappement de vapeur (14, 18),
pendant la détection de l'échappement de vapeur, la puissance de réchauffage et/ou une valeur de consigne de la température de la chambre de cuisson, d'après laquelle la puissance de réchauffage est réglée, étant réduite, et/ou
la période de temps t1 entre le commencement du réchauffage du produit de cuisson et l'échappement de vapeur étant mesurée et une période t2, t3 ou un moment du début d'au moins une phase de cuisson suivante étant définie dépendant de la période de temps t1
**caractérisée en ce que** la détection de l'échappement de vapeur est supprimée avant un instant ta.

2. Méthode selon la revendication 1, le capteur d'échappement de vapeur (14, 18) comportant une ouverture (14) à la chambre de cuisson (1) et un capteur de température (18) arrangé hors de l'ouverture, le capteur d'échappement de vapeur (14, 18) émettant un signal quand une température (Tx) au capteur de température (18) dépasse une haute valeur de seuil (Ts2).

3. Méthode selon la revendication 2, de la vapeur étant fournie à la chambre de cuisson (1) avec un générateur de vapeur (4), au moins pendant une partie de la phase de réchauffage, et de l'énergie étant fournie au générateur de vapeur (4) quand la température (Tx) au capteur de température (18) se trouve au dessous d'une basse valeur de seuil (Ts1).

4. Méthode selon la revendication 3, la détection de l'échappement de vapeur étant supprimée quand l'énergie est fournie au générateur de vapeur (4).

5. Méthode selon l'une des revendications précédentes, l'instant ta se trouvant au plus tôt après une période de temps taz depuis le commencement du réchauffage du produit de cuisson.

6. Méthode selon l'une des revendications précédentes, la température de consigne de la chambre de cuisson, d'après laquelle la puissance de réchauffage est réglée, pendant une détection de l'échappement de vapeur, étant réduite pendant une phase de cuisson (C).

7. Méthode selon la revendication 6, la phase de cuisson s'étendant pendant la période de temps t2.

8. Méthode selon la revendication 6, la phase de cuisson étant terminée quand l'échappement de vapeur du produit de cuisson tombe au dessous d'une valeur minimale.

9. Méthode selon l'une des revendications 6 à 8, une phase de brunissement suivant la phase de cuisson, dans laquelle la température dans la chambre de cuisson (1) est augmentée de nouveau par rapport à la phase de cuisson.

10. Méthode selon l'une des revendications précédentes, un paramètre (p), qui dépend de l'énergie qui a été fournie à la chambre de cuisson (1) jusqu'à l'échappement de vapeur, étant mesuré pendant la phase de réchauffage, le paramètre (p) étant utilisé pour définir une période de temps et/ou une température d'au moins une phase de cuisson suivante.

11. Méthode selon l'une des revendications précédentes, le produit de cuisson étant réchauffé avec de la vapeur et/ou microondes pendant la phase de réchauffement.

12. Dispositif de cuisson avec une commande formée pour exécuter la méthode selon l'une des revendications précédentes de manière automatique.
